# FASCICULE DE BREVET EUROPEEN

(11) **EP 2 384 809 B1**
(45) Date de publication et mention de la délivrance du brevet: **19.06.2013**
(21) Numéro de dépôt: 11290182.2
(22) Date de dépôt: 12.04.2011
(51) Int. Cl.: B01J 8/02, C10G 49/00, B01D 24/00

(54) **Réacteur avec paniers amobiles contenant des particules de filtration pour réacteur à lit fixe**
Reaktor mit herausnehmbaren Körben, die Filterpartikel für einen Festbettreaktor enthalten
Reactor with removable baskets containing filtering particles for a fixed-bed reactor

(30) Priorité: 06.05.2010 FR 1001956
(43) Date de publication de la demande: 09.11.2011
(73) Titulaire: IFP Energies nouvelles, 92852 Rueil-Malmaison Cedex (FR)
(72) Inventeur: Koudil, Abdelhakim, 69720 Saint-Laurent-de-Mure (FR); Guibard, Isabelle, 69360 St Symphorien d'Ozon (FR); Boyer, Christophe, 69390 Charly (FR); Bazer-Bachi, Frederic, 69230 Saint Genis-Laval (FR)

(56) Documents cités:
- EP-A1- 2 047 901
- WO-A1-03/035212
- FR-A1- 2 889 973

## Description

### DOMAINE DE L'INVENTION

La présente invention se situe dans le domaine des réacteurs en lit fixe utilisés dans de très nombreux domaines du raffinage parmi lesquels on peut citer les hydrogénations de diverses coupes pétrolières ayant un point d'ébullition supérieur à 120°C et préférentiellement supérieur à 250°C.

L'invention s'applique plus particulièrement aux procédés traitant des charges lourdes susceptibles d'entrainer des problèmes de colmatage du lit catalytique. En effet dans ce cas, il est connu de l'homme du métier d'utiliser en amont du lit catalytique lui même un ou plusieurs lits de filtration destinés à protéger le lit catalytique du colmatage. Ces lits de filtration après colmatage doivent être régulièrement remplacés par des lits de filtration frais, la fréquence de ces changements dépendant beaucoup du procédé et de la nature chimique des particules colmatantes.

La présente invention a essentiellement pour but de faciliter et retarder les opérations de remplacement de tels lits de filtration.

Son domaine d'application est très vaste et la présente invention est compatible avec les systèmes de plateaux distributeurs qui ont été développés dans le domaine des lits fixes à écoulements diphasiques, particulièrement dans le cas des procédés faisant appel à un écoulement descendant gaz liquide.

Lors du chargement des particules de filtration sur le plateau distributeur d'un réacteur gaz liquide à co courant descendant, des difficultés peuvent apparaitre. En effet, les couches de particules filtrantes constituant le lit sont de relativement faibles épaisseurs, généralement quelques dizaines de centimètres, et la difficulté d'un chargement homogène en hauteur provient en grande partie de la présence de cheminées sur le plateau, cheminées généralement distantes de 100 mm à 500 mm.

Un chargement en pluie est également difficile, car la présence de ces cheminées va perturber le niveau du lit de particules à leur voisinage.

En utilisant des paniers amovibles selon l'invention, le chargement des paniers en particules de filtration peut se faire à l'extérieur du réacteur, ce qui facilite et accélère grandement l'opération, celle ci se limitant à la mise en place des paniers chargés sur le plateau filtrant.

Le réglage de la hauteur des particules de filtration dans chaque panier peut se faire de manière très précise panier par panier.

Lors du déchargement, il arrive souvent que, du fait de la prise en masse des particules filtrées sur les particules de filtration, le lit de filtration constitue un bloc qu'on ne peut fragmenter qu'au marteau piqueur ou tout moyen équivalent. Cette opération est à la fois pénible et risque d'endommager les cheminées et autres éléments constitutifs du plateau filtrant.

L'utilisation d'un marteau piqueur, par exemple, risque également d'endommager la paroi du réacteur et notamment la couche de protection contre la corrosion. Le réacteur se trouve alors fragilisé et soumis à des risques importants de corrosion.

La présente invention permet d'éviter l'opération de fragmentation d'un lit de filtration qui aurait pris en masse, car le lit est constitué de multiples paniers contenant les particules de filtration de sorte que, même si certains paniers ont pris en masse, il est toujours possible de les retirer aisément. De fait, la présente invention permet également de limiter la durée d'immobilisation de l'unité.

### EXAMEN DE L'ART ANTERIEUR

L'art antérieur dans le domaine des réacteurs en lit fixe à écoulement monophasique gaz ou liquide, ou à écoulement diphasique gaz et liquide est très vaste, et on se limitera aux documents qui décrivent des systèmes de filtration appelés plateaux filtrants, car c'est plus particulièrement dans le domaine des charges lourdes contenant des particules colmatantes que la présente invention trouve ses applications.

On peut trouver une description de ce type de plateaux filtrants dans le document FR 2 889 973 qui se situe dans le cadre des réacteurs à co-courant descendant d'une phase gaz et d'une phase liquide. Le plateau filtrant décrit dans ce document est situé en amont d'un lit catalytique, et est constitué d'un plan de base fixé aux parois du réacteur et soutenant un ensemble de cheminées permettant l'admission du gaz à leur extrémité supérieure, l'admission du liquide par des orifices latéraux, et l'évacuation du mélange gaz liquide par leur extrémité inférieure. Le plateau supporte un lit de filtration entourant les cheminées, ledit lit étant constitué d'au moins une couche de particules filtrantes.

Le document cité ne fait pas mention des problèmes de manutention et de décolmatage du lit de filtration dont la présente invention constitue une solution.

La présente invention dépasse le cadre des réacteurs à écoulement descendant et concerne aussi bien les réacteurs à écoulement ascendant.

### DESCRIPTION SOMMAIRE DES FIGURES

La figure 1 représente une vue en perspective cavalière d'un panier filtrant dans lequel apparaissent la hauteur du panier Hp et la longueur d'un côté Lp.
La figure 2 donne quelques exemples de formes possibles de la section supérieure des paniers.
La figure 3 permet d'illustrer l'exemple et montre des paniers élémentaires (figure 3a) et des paniers traversés par une cheminée centrale (figure 3b).

### DESCRIPTION SOMMAIRE DE L'INVENTION

La présente invention peut se définir comme un dispositif de paniers amovibles enfermant des particules solides de filtration, l'ensemble des paniers permettant de couvrir l'intégralité du lit de filtration, généralement situé en amont du lit catalytique. Le terme amont est à prendre au sens de l'écoulement du ou des fluides réactionnels.

Dans la suite du texte, on parle de lit de filtration comme désignant l'ensemble des paniers filtrants.

De façon plus précise, la présente invention consiste en un dispositif de filtration placé en amont du lit catalytique d'un réacteur monophasique ou diphasique, fonctionnant en mode descendant ou ascendant, ledit dispositif consistant en une multiplicité de paniers contenant des particules de filtration de dimension principale (dp), ces paniers étant supportés par un plateau de base fixé aux parois du réacteur, dit plateau de filtration. L'ensemble des paniers couvre de manière compacte au moins la partie centrale de la section du réacteur, et forme un lit de filtration de hauteur Hp, chaque panier étant défini par au moins trois parois latérales sensiblement verticales et par une paroi inférieure, les parois latérales et la paroi inférieure des paniers étant percées d'orifices dont la taille est inférieure à celle des particules de filtration (dp). On entend par l'expression "de manière compacte" le fait qu'il n'y a pas d'espace vide entre les paniers qui forment donc une couverture continue de la partie centrale du réacteur. Dans beaucoup d'applications, et notamment pour les procédés d'hydrotraitement, d'hydrogénation sélective ou de conversion des résidus ou de coupes hydrocarbonées ayant un point d'ébullition supérieur à 120°C, préférentiellement supérieur à 250°C, le dispositif de filtration selon la présente invention, s'incorpore à un plateau de filtration comportant des cheminées verticales, destinées au mélange des phases gaz et liquide. La hauteur Hp des paniers filtrants est alors inférieure à la hauteur desdites cheminées d'une valeur comprise entre 0 et 100 mm.

Généralement les paniers filtrants sont délimités par une cheminée située à chaque extrémité des côtés dudit panier (appelé aussi angle).

On distingue les paniers filtrants attenants à la paroi du réacteur, dit paniers périphériques, et les paniers filtrants qui ne sont pas attenants à la paroi du réacteur, dits paniers centraux. Dans une variante de la présente invention, les paniers filtrants centraux sont traversés par une ou plusieurs cheminées centrales.

Dans une autre variante de la présente invention, une partie des paniers attenants à la paroi du réacteur, dits paniers périphériques, est supprimée et remplacée par des particules de filtration directement disposées dans l'espace séparant les paniers centraux de la paroi du réacteur. Les particules de filtration sont alors généralement introduites en vrac.

Certains paniers adjacents peuvent être boulonnés, agrafés ou soudés entre eux, ainsi qu'à la surface horizontale du plateau, de manière à améliorer la rigidité de l'ensemble des dits paniers.

Dans une autre variante de la présente invention, la couche supérieure du lit catalytique sur une hauteur généralement comprise entre 200 mm et 1500 mm, est enfermée dans des paniers dits catalytiques, de forme analogue à celle des paniers de filtration.

L'application du dispositif de filtration selon la présente invention concerne plus particulièrement les procédés d'hydrotraitement, d'hydrogénation sélective ou de conversion des résidus ou de coupes hydrocarbonées ayant un point d'ébullition supérieur à 120°C, préférentiellement supérieur à 250°C.

### DESCRIPTION DETAILLEE DE L'INVENTION

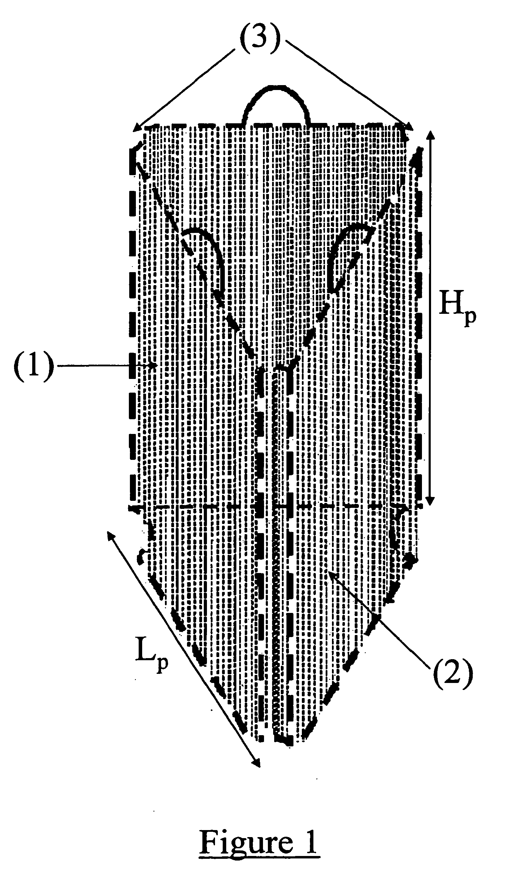

Un panier de filtration selon la présente invention, tel que représenté sur la figure 1, est constitué d'au moins trois parois latérales sensiblement verticales (1), et d'une paroi inférieure (2), faites d'un grillage métallique ou d'un grillage de type grille Johnson, ou d'une plaque métallique percée d'orifices.

La taille des mailles de la grille ou des orifices est telle que celle ci est strictement inférieure à la dimension moyenne des particules solides contenues dans le panier.

Le panier a pour dimensions principales la hauteur Hp, et la longueur Lp d'un côté permettant de définir la section horizontale dudit panier.

La section horizontale d'un panier peut être triangulaire (cas de 3 parois latérales), quadrangulaire (cas de 4 parois latérales), ou présenter une forme incurvée permettant de suivre la forme de la paroi du réacteur.

L'ensemble des paniers s'ajuste de manière à couvrir toute la section du réacteur en laissant seulement un espace libre ou jeu fonctionnel entre les parois latérales des paniers adjacents de manière à permettre leur mouvement d'introduction ou de retrait individuellement, c'est à dire panier par panier. C'est ce qu'on entend par le fait que les paniers forment une couverture compacte au moins de la partie centrale de la section du réacteur.

Les particules qui sont attenantes aux parois de deux paniers adjacents sont séparées par l'épaisseur des dites parois, ce qui prévient le colmatage entre paniers.

Les paniers qui ont une paroi en contact avec la paroi du réacteur présentent sur certaines de leur parois latérales une courbure qui épouse la courbure de la paroi du réacteur. Néanmoins dans certains cas, ces paniers périphériques (Pp), ou au moins certains d'entre eux, peuvent être supprimés. Les particules de filtration sont alors directement introduites dans l'espace compris entre les parois des paniers centraux (Pc) et la paroi du réacteur.

Dans le cas d'un réacteur à écoulement descendant gaz et liquide, la forme de la section supérieure d'un panier doit tenir compte de la présence de cheminées, ces cheminées permettant selon les cas le passage du gaz ou le passage du liquide, et souvent le passage mélange du gaz et du liquide réalisé au sein desdites cheminées.

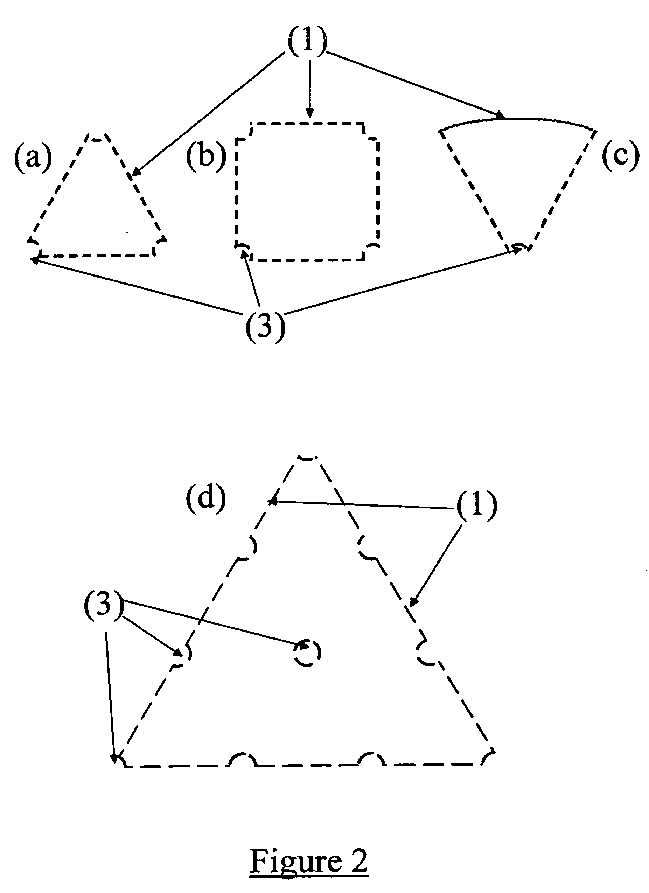

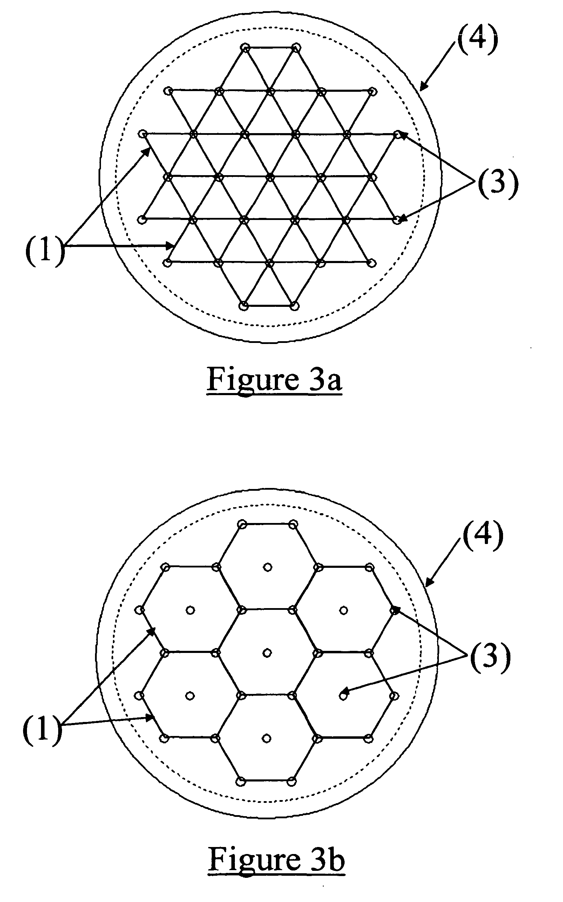

Deux cas de figures peuvent se présenter:
a) un panier a ses angles limités par une cheminée (3), et le panier ne possède aucun emplacement pour le passage d'une cheminée centrale. En pratique ces paniers, dits paniers élémentaires, sont donc disposés entre des cheminées voisines et épousent le pas desdites cheminées. C'est la solution qui correspond aux paniers les plus petits et donc au plus grand nombre de paniers pour couvrir toute la section du réacteur. On a un exemple de paniers de ce type sur les figures 2a, 2b, 2c et sur la figure 3a.
b) un panier a ses angles limités par une cheminée (3) et est traversé par au moins une cheminée centrale. Dans ce cas, le panier couvre une surface plus importante qui correspond à un multiple de la section des paniers élémentaires. Par exemple, sur la figure 3b on voit un panier de forme hexagonale avec une cheminée au centre, et 6 cheminées, une à chacun des angles de l'hexagone. Sur la figure 2d on voit un panier de forme triangulaire traversé par une cheminée centrale, avec une cheminée à chaque angle et deux cheminées sur chaque côté du triangle.

La hauteur des paniers Hp est généralement égale ou inférieure à la hauteur des cheminées. Les paniers sont le plus souvent munis de moyens d'accrochage qui permettent leur manutention au moyen d'un système de type oreilles de levage.

Le dispositif de filtration de la présente invention consiste en une multiplicité de paniers contenant des particules de filtration de dimension principale (dp), ces paniers étant supportés par un plateau de base fixé aux parois du réacteur, dit plateau de filtration.

Ces paniers ont généralement des formes identiques à l'exception éventuellement des paniers touchant la paroi du réacteur qui ont une partie de leurs parois incurvées de manière à épouser la forme des parois (4) du réacteur.

L'ensemble des paniers couvre au moins la partie centrale de la section du réacteur, et forme un lit de filtration de hauteur Hf, chaque panier étant défini par au moins trois parois latérales sensiblement verticales délimitant une section triangulaire, ou quadrangulaire, ou toute autre forme géométrique permettant l'insertion du panier entre les cheminées, et par une paroi inférieure. Les parois latérales et inférieure sont percées d'orifices dont la taille est inférieure à celle des particules de filtration (dp).

On distingue les paniers qui n'ont aucune de leur paroi en contact avec la paroi du réacteur et qu'on appelle paniers centraux, des paniers qui ont une partie de leurs parois en contact avec la paroi du réacteur et qu'on appelle paniers périphériques.

Dans une variante de la présente invention une partie des paniers attenants à la paroi du réacteur, dits paniers périphériques, peut être supprimée et remplacée par des particules de filtration directement disposées dans l'espace séparant les paniers centraux de la paroi du réacteur.

Un panier est défini géométriquement par son nombre de parois latérales, la hauteur Hp desdites parois latérales, et par la longueur Lp d'un de ses côtés.

La figure 3 montre plusieurs formes possibles de la section d'un panier.

Dans le cas où le plateau de filtration supportant les paniers présente des cheminées, ce qui est généralement le cas pour les réacteurs en écoulement diphasique, les paniers ont une section qui peut être triangulaire ou quadrangulaire, et les angles du triangle ou du quadrilatère correspondent à l'emplacement des cheminées comme cela est monté sur la figure 3.

Les paniers dits centraux peuvent dans certains cas être traversés par une cheminée, augmentant de ce fait les possibilités de forme géométrique. Ils peuvent être boulonnés, agrafés ou soudés entre eux, ainsi qu'à la surface horizontale du plateau qui les soutient.

La notion de paniers peut également être appliquée à une fraction du lit catalytique lui même, en limitant la hauteur des paniers catalytiques entre 200 mm et 1500 mm. Bien entendu, on reste dans le cadre de la présente invention en utilisant à la fois des paniers de filtration et des paniers catalytiques.

### EXEMPLE SELON L'INVENTION

On donne dans cet exemple deux cas de dimensionnement de paniers de filtration pour un réacteur d'hydrogénation sélective d'une coupe à point d'ébullition située dans l'intervalle 150°C à 200°C. Ce réacteur est muni d'un plateau distributeur attenant aux parois du réacteur et muni de cheminées pour permettre le mélange du gaz et du liquide.

Les principales caractéristiques du plateau de distribution, des cheminées, et des paniers de filtration sont les suivantes:
Diamètre du lit catalytique : 1 m

Caractéristiques des cheminées :
- Diamètre : 25 mm
- Pas entre cheminées : 150 mm
- Hauteur : 350 mm
- Nombre total de cheminées : 31
- Les cheminées sont percées de:
- 3 trous de 9 mm à 50 mm du niveau du plateau à 120° les uns des autres
- 3 trous de 9 mm à environ 250 mm à 120° (au dessus du niveau supérieur du catalyseur)

### Hauteur du lit de filtration: 270 mm

### Hauteur des paniers filtrants: 310 mm

Il n'y a pas de paniers attenants à la paroi du réacteur. Dans l'espace compris entre la paroi du réacteur et les paniers centraux, le remplissage est fait en vrac avec les mêmes particules que celles des paniers. On définit deux schémas de paniers qui répondent tous deux aux contraintes de couverture du réacteur. Chaque panier est muni d'un moyen permettant sa manutention aisée par une grue ou tout autre moyen de levage.

Schéma 1: On constitue le lit de filtration par des paniers élémentaires, c'est à dire s'intercalant entre les cheminées, soit 3+9+9+9+9+3= 42 paniers (Cf figure 3). Schéma 2: On constitue le lit de filtration par des paniers traversés par une cheminée intérieure: soit 7 paniers de forme hexagonale (Cf figure 3).

## Revendications

1. Réacteur à lit catalytique fonctionnant en mode descendant ou ascendant comportant un dispositif de distribution et de filtration placé en amont du lit catalytique dudit réacteur, dispositif consistant en une multiplicité de paniers contenant des particules de filtration de dimension principale (dp), ces paniers étant supportés par un plateau fixé aux parois du réacteur, dit plateau de filtration, l'ensemble des paniers couvrant de manière compacte au moins la partie centrale de la section du réacteur, et formant un lit de filtration de hauteur Hp, chaque panier étant défini par au moins trois parois latérales sensiblement verticales et par une paroi inférieure, et les parois latérales et inférieure des paniers étant percées d'orifices dont la taille est inférieure à celle des particules de filtration (dp).

2. Réacteur à lit catalytique selon la revendication 1, dans lequel lorsque le plateau de filtration comporte des cheminées verticales, la hauteur Hp des paniers filtrants est inférieure à la hauteur desdites cheminées d'une valeur comprise entre 0 et 100 mm.

3. Réacteur à lit catalytique selon la revendication 2, dans lequel les paniers filtrants sont délimités par une cheminée située à chaque extrémité des côtés dudit panier.

4. Réacteur à lit catalytique selon la revendication 2, dans lequel les paniers filtrants centraux sont traversés par une ou plusieurs cheminées centrale.

5. Réacteur à lit catalytique selon la revendication 1, dans lequel une partie des paniers attenants à la paroi dudit réacteur, dits paniers périphériques, est supprimée et remplacée par des particules de filtration directement disposées dans l'espace séparant les paniers centraux de la paroi du réacteur.

6. Réacteur à lit catalytique selon la revendication 1, dans lequel une partie ou la totalité des paniers adjacents sont boulonnés, agrafés ou soudés entre eux et/ou à la surface horizontale du plateau supportant lesdits paniers, de manière à améliorer la rigidité de l'ensemble des dits paniers.

7. Réacteur à lit catalytique selon la revendication 1, dans lequel s'ajoutent aux paniers de filtration des paniers de forme similaire auxdits paniers de filtration qui enferment la couche supérieure du lit catalytique sur une hauteur comprise entre 200 et 1500 mm.

8. Application du réacteur à lit catalytique selon la revendication 1 aux procédés d'hydrotraitement, d'hydrogénation sélective ou de conversion des résidus ou de coupes hydrocarbonées ayant un point d'ébullition supérieur à 120°C, préférentiellement supérieur à 250°C.

## Patentansprüche

1. Reaktor mit katalytischem Bett, der im absteigenden oder aufsteigenden Modus arbeitet und eine Verteilungs- und Filtrationsvorrichtung umfasst, die stromaufwärts des katalytischen Betts des Reaktors angeordnet ist, wobei diese Vorrichtung aus einer Vielzahl von Körben besteht, die Filterpartikel mit einer Hauptabmessung (dp) enthalten, wobei diese Körbe von einer an den Wänden des Reaktors befestigten Platte getragen werden, die Filterplatte genannt wird, wobei die Gesamtheit der Körbe auf kompakte Weise mindestens den mittleren Teil des Querschnitts des Reaktors bedeckt und ein Filterbett mit einer Höhe Hp bildet, wobei jeder Korb durch mindestens drei im Wesentlichen vertikale Seitenwände und durch eine untere Wand definiert ist und die Seitenwände und die untere Wand der Körbe von Öffnungen durchbohrt sind, deren Größe kleiner als diejenige der Filterpartikel (dp) ist.

2. Reaktor mit katalytischem Bett nach Anspruch 1, wobei, wenn die Filterplatte vertikale Luftschächte aufweist, die Höhe Hp der Filterkörbe um einen Wert, der zwischen 0 und 100 mm liegt, kleiner als die Höhe der Luftschächte ist.

3. Reaktor mit katalytischem Bett nach Anspruch 2, wobei die Filterkörbe an jedem Ende der Seiten des jeweiligen Korbes durch einen Luftschacht begrenzt sind.

4. Reaktor mit katalytischem Bett nach Anspruch 2, wobei die mittleren Filterkörbe von einem oder mehreren mittleren Luftschächten durchquert werden.

5. Reaktor mit katalytischem Bett nach Anspruch 1, wobei ein Teil der an die Wand des Reaktors angrenzenden Körbe, die periphere Körbe genannt werden, weggelassen wird und durch Filterpartikel ersetzt wird, die direkt in dem Zwischenraum angeordnet sind, der die mittleren Körbe von der Wand des Reaktors trennt.

6. Reaktor mit katalytischem Bett nach Anspruch 1, wobei ein Teil der benachbarten Körbe oder alle untereinander und/oder mit der horizontalen Fläche der die Körbe tragenden Platte verschraubt, mit Klammern befestigt oder verschweißt sind, so dass die Steifigkeit der Gesamtheit der Körbe verbessert wird.

7. Reaktor mit katalytischem Bett nach Anspruch 1, wobei sich an die Filterkörbe Körbe mit einer Form, die den Filterkörben ähnlich ist, anschließen, welche auf einer Höhe zwischen 200 und 1500 mm die obere Schicht des katalytischen Betts enthalten.

8. Anwendung des Reaktors mit katalytischem Bett nach Anspruch 1 bei Verfahren der Hydrobehandlung, der selektiven Hydrierung oder der Umwandlung der Kohlenwasserstoffreste oder von Kohlenwasserstoffschnitten mit einem Siedepunkt, der höher als 120 °C, vorzugsweise höher als 250 °C ist.

## Claims

1. Reactor using a catalytic bed functioning in downflow or upflow mode, containing a device for distribution and filtration placed upstream the catalytic bed of said reactor, said device consisting of a plurality of baskets containing filtration particles with a principal dimension (dp), said baskets being supported by a plate fixed to the walls of the reactor, termed the filtration plate, the assembly of baskets covering in a compact manner at least the central portion of the section of the reactor and forming a filtration bed with a height Hp, each basket being defined by at least three substantially vertical lateral walls and by a lower wall, the lateral walls and the lower wall of the baskets being pierced with orifices with a smaller size than that of the filtration particles (dp).

2. Reactor using a catalytic bed according to claim 1 in which, when the filtration plate comprises vertical chimneys, the height Hp of the filtration baskets is less than the height of said chimneys by a value in the range 0 to 100 mm.

3. Reactor using a catalytic bed according to claim 2, in which the filtration baskets are defined by a chimney located at each extremity of the sides of said basket.

4. Reactor using a catalytic bed according to claim 2, in which the central filtration baskets are traversed by one or more central chimneys.

5. Reactor using a catalytic bed according to claim 1, in which a portion of the baskets having contact with the wall of the reactor, termed peripheral baskets, is dispensed with and replaced by filtration particles disposed directly in the space separating the central baskets from the wall of the reactor.

6. Reactor using a catalytic bed according to claim 1, in which a portion or all of the adjacent baskets are bolted, clamped or welded together and/or to the horizontal surface of the plate, in order to improve the rigidity of the assembly of said baskets.

7. Reactor using a catalytic bed according to claim 1, in which the filtration baskets are supplemented with baskets having a shape similar to said filtration baskets and which enclose the upper layer of the catalytic bed over a height in the range 200 to 1500 mm.

8. Application of the reactor using a catalytic bed according to claim 1 to processes for hydrotreatment, selective hydrogenation or conversion of residues or hydrocarbon cuts with a boiling point of more than 120°C, preferably more than 250°C.
